(19) Europäisches Patentamt
European Patent Office
Office européen des brevets

(11) Veröffentlichungsnummer: **0 237 117 B1**

(12) **EUROPÄISCHE PATENTSCHRIFT**

(45) Veröffentlichungstag der Patentschrift:
24.07.91 Patentblatt 91/30

(51) Int. Cl.⁵ : **G11B 19/16, G11B 33/02,**
**G11B 33/10**

(21) Anmeldenummer: 87200374.4

(22) Anmeldetag: 02.03.87

(54) Aufzeichnungs- und/oder Wiedergabegerät.

(30) Priorität: 07.03.86 AT 592/86

(43) Veröffentlichungstag der Anmeldung:
16.09.87 Patentblatt 87/38

(45) Bekanntmachung des Hinweises auf die
Patenterteilung:
24.07.91 Patentblatt 91/30

(84) Benannte Vertragsstaaten:
DE FR GB

(56) Entgegenhaltungen:
US-A- 4 032 971
US-A- 4 342 058

(56) Entgegenhaltungen:
PATENT ABSTRACTS OF JAPAN, Band 9, Nr.
50 (P-339)[1773], 5. März 1985; & JP - A - 59 188
865 (MATSUSHITA) 26.10.1984
PATENT ABSTRACTS OF JAPAN, Band 10, Nr.
260 (P-494)[2316], 5. September 1986; & JP - A -
61 85668 (FUJI) 01.05.1986

(73) Patentinhaber: N.V. Philips'
Gloeilampenfabrieken
Groenewoudseweg 1
NL-5621 BA Eindhoven (NL)

(72) Erfinder: Horvath, Othmar
Int. Octrooibureau B.V. Prof. Holstlaan 6
NL-5656 AA Eindhoven (NL)

(74) Vertreter: Schrijnemaekers, Hubert Joannes
Maria et al
Internationaal Octrooibureau B.V. Prof.
Holstlaan 6
NL-5656 AA Eindhoven (NL)

## Beschreibung

Die Erfindung bezieht sich auf ein Aufzeichnungs- und/oder Wiedegabegerät mit einem zum Aufnehmen eines Aufzeichnungsträgers vorgesehenen Aufnahmeraum, einer zum Verschliessen des Aufnahmeraumes vorgesehenen verstellbaren Abdeckung die von Hand aus der Offenposition entgegen der Kraft von mindestens einer ersten Feder in die Schliessposition verstellbar ist, einem zum Festhalten der Abdeckung in ihrer Schliessposition vorgesehenen Verriegelungsteil, das von Hand entgegen der Kraft von mindestens einer zweiten Feder aus der Verriegelungsposition in die Freigabeposition verstellbar ist, und einem zum Ein- und Ausschalten von elektrischen Einrichtungen des Gerätes vorgesehenen elektrischen Schalter, der beim Verstellen des Verriegelungsteiles in die Freigabeposition diese elektrischen Einrichtungen ausschaltet, bevor die Abdeckung aus ihrer Schliessposition verstellt wird, und bei aus ihrer Schliessposition verstellter Abdeckung diese elektrischen Einrichtungen ausgeschaltet hält, und dessen Schaltkontakte sich entweder in einem ersten Schaltzustand, in dem über den Schalter die elektrischen Einrichtungen einschaltbar sind, oder in einem zweiten Schaltzustand, in dem über den Schalter die elektrischen Einrichtungen ausgeschaltet sind, befinden, und die beim Verstellen des Verriegelungsteiles aus seiner Verriegelungsposition in seine Freigabeposition vom Verriegelungteil in ihren zweiten Schaltzustand bringbar sind.

Solch ein Gerät ist bekannt aus JP-A 59-1888865. Das bekannte Gerät ist ein Tonbandgerät, das versehen ist mit einem Aufnahmeraum für eine Kassette und einer zum Verschliessen des Aufnahmeraumes verstellbaren Abdeckung, wobei zum Festhalten der Abdeckung in ihrer Schliessposition ein Verriegelungsmechanismus vorgesehen ist. Das Tonbandgerät weist weiterhin einen zum Ein- und Ausschalten elektrischer Einrichtungen des Gerätes vorgesehenen Schalter auf, wobei beim Freigeben der Abdeckung das Verriegelungteil den Schalter betätigt, wobei die Schaltkontakte des Schalters aus einem ersten Schaltzustand in einen zweiten Schaltzustand gebracht und die elektrischen Einrichtungen ausgeschaltet werden, bevor die Abdeckung verstellt wird. Die Abdeckung ist versehen mit einem Betätigungsarm, der beim öffnen der Abdeckung und in ihrer Offenposition das Verriegelungsteil gegen den Schalter drückt zum Beibehalten des zweiten Schaltzustandes.

Bei einem im Handel erhältlichen Gerät handelt es sich um ein Wiedergabegerät zum Wiedergeben von Tonsignalen von einem plattenförmigen, rotierend antreibbaren, mit einem Laserstrahl abstratbaren Aufzeichnungsträger, das unter der Bezeichnung Compact-Disc-Spieler allgemein bekannt ist. Mit der Schaltteinrichtung dieses bekannten Gerätes sind von den elektrischen Einrichtungen des Gerätes unter anderem die motorische Antriebseinrichtung für den Aufzeichnungsträger und die einem Laser enthaltende Abtasteinrichtung für den Aufzeichnungsträder ein- und ausschaltbar. Diese Schalteinrichtung weist zwei Schalter auf. Der erste Schalter wird beim Betätigen einer Taste, die zum Verstellen des Verriegelungsteiles zum Freigeben der Abdeckung vorgesehen ist, von dieser Taste betätigt, bevor die Abdeckung aus ihrer Schliessposition verstellt wird, wodurch die Antriebseinrichtung und die Abtasteinrichtung bei sich noch in ihrer Schliessposition befindlicher Abdeckung ausgeschaltet werden. Der zweite Schalter wird betätigt, wenn die Abdeckung aus ihrer Schliessposition heraus verstellt wird, wodurch die Antriebseinrichtung und die Abtasteinrichtung bei geöffneter Abdeckung ausgeschaltet bleiben, dies unabhängig von dem Schaltzustand des ersten Schalters. Durch das Ausschalten der Antriebseinrichtung, bevor die Abdeckung aus ihrer Schliessposition verstellt wird, ist erreicht, dass der Aufzeichnungsträger rechtzeitig ausreichend abgebremst werden kann, so dass ein Herausschleudern des Aufzeichnungsträgers aus dem Gerät sowie eine Beschädigung des Aufzeichnungsträgers und der Antriebseinrichtung verhindert ist. Durch das Ausschalten der Antriebseinrichtung bei geöffneter Abdeckung ist sichergestellt, dass beim Einsetzen des Aufzeichnungsträgers in den Aufnahmeraum Beschädigungen der Antriebseinrichtung und des Aufzeichnungsträgers verhindert sind. Durch das Ausschalten der Abtasteinrichtung ist erreicht, dass der Laser bei geöffneter Abdeckung keinen Laserstrahl abgibt, wodurch für einen sicheren, behörlich vorgeschriebenen Strahlerschutz gesorgt ist.

Die Erfindung hat sich zur Aufgabe gestellt, ein Gerät eingangs angeführter Gattung so auszubilden, dass die vorstehend beschriebenen Ausschaltfunktionen auf genauso zuverlässige Weise, jedoch mit einfacheren und billigeren Mitteln als bei den bekannten Geräten erreicht werden.

Das gerät gemäss der Erfindung ist dadurch gekennzeichnet, dass die Schaltkontakte des Schalters von der Abdeckung über ein mit derselben verstellbares Betätigunsteil in den ersten Schaltzustand geschaltet sind, wenn die Abdeckung sich in ihrer Schliessposition befindet. Auf diese Weise ist eine Vereinfachung im Hinblick auf Montage und Justierungsmassnahmen und eine Verbilligung erreicht.

An dieser Stelle sei erwähnt, dass aus der US-A 4 032 971 ein Gerät bekannt ist, das einen mit einer Abdeckung verschliessbaren Aufnahmeraum für einen Aufzeichnungsträger und einen zum Festhalten der Abdeckung in ihrer Schliessposition vorgesehenen, von Hand aus über einen Schiebeknopf verstellbaren Verriegelungsteil aufweist. Dieses bekannte Gerät weist auch eine Schalteinrichtung mit einem einzigen Schalter zum Ein- und Ausschalten der Antriebseinrichtung und der Abtasteinrichtung auf. Die Schaltkontakte dieses Schalters sind von der Abdeckung über einen von derselben abstehenden Lappen und über einen im Gerät schwenkbar gelagerten Zwischenhebel betätigbar. Dadurch können die Schaltkontakte dieses Schalters aber erst bei aus ihrer Schliessposition verstellter Abdeckung betätigt werden, um die Antriebseinrichtung und die Abtasteinrichtung auszuschalten. Daher werden die Antriebseinrichtung und die Abtasteinrichtung erst nach dem Verstellen der Abdeckung aus ihrer Schliessposition ausgeschaltet. Um die dadurch bestehende Gefahr des Herausschleuderns des Aufzeichnungsträgers aus dem Gerät und der Beschädigung des Aufzeichnungsträgers und der Antriebseinrichtung für denselben zu beseitigen, wird deshalb bei diesem bekannten Gerät die Abdeckung nach der Verstellung aus ihrer Schliessposition und bei schon betätigten Schaltkontakten in einer knapp neben der Schliessposition liegenden Zwischenposition, in der der Aufzeichnungsträger noch geschützt ist, für eine vorgegebene Zeitspanne, die für ein einwandfreies Abbremsen der Antriebseinrichtung ausreicht, angehalten. Hierfür ist aber ein relativ komplizierter, den Verriegelungsteil enthaltender Verriegelungsmechanismus für die Abdeckung und zur Realisierung der vorerwähnten Zeitspanne eine mechanische Verzögerungseinrichtung für den Verriegelungsteil vorgesehen, was einen erheblichen Aufwand bedeutet. Demgegenüber wird beim erfindungsgemässen Gerät das zeitgerechte Ausschalten der Antriebseinrichtung, um ein Herausschleudern des Aufzeichnungsträgers aus dem Gerät und eine Beschädigung des Aufzeichnungsträgers und der Antriebseinrichtung für denselben zu verhindern, ohne zusätzliche Mittel mit nur dem einen Schalter erreicht.

Es kann beispielsweise ein im Gerät feststehend angeordneter Schalter vorgesehen werden, der als Schaltkontakte zwei miteinander zusammenwirkende Kontaktfedern aufweist, von denen eine von dem mit der Abdeckung verstellbaren Betätigungsteil und die andere von einem weiteren mit dem Verriegelungsteil verstellbaren Betätigungsteil betätigbar ist. Als besonders vorteilhaft hat sich erwiesen, wenn der Schalter an dem Verriegelungsteil angebracht ist und seine Schaltkontakte bei in seiner Verriegelungsposition befindlichem Verriegelungsteil und in ihrer Schliessposition befindlicher Abdeckung von dieser über den mit derselben verstellbaren Betätigungsteil in ihren ersten Schaltzustand geschaltet sind und beim Verstellen des Verriegelungsteiles von seiner Verriegelungsposition in seine Freigabeposition gegenüber den mit der Abdeckung verstellbaren Betätigungsteil freigestellt werden und dabei in ihren zweiten Schaltzustand gelangen. Dadurch ist erreicht, dass ein einfacher, billiger, handelsüblicher Schalter verwendet werden kann. Der Schalter kann besonders einfach mit nur einem verstellbaren Schaltnippel ausgebildet sein, weil der erste Schaltzustand der Schaltkontakte durch Betätigen des Schaltnippels über den mit der Abdeckung verstellbaren Betätigungsteil und der zweite Schaltzustand der Schaltkontakte unter Freistellung derselben gegenüber dem mit der Abdeckung verstellbaren Betätigungsteil durch das Verstellen des ganzen Schalters mit dem Verriegelungsschieber erhalten wird.

Der mit der Abdeckung verstellbare Betätigungsteil kann beispielsweise durch einen mit der Abdeckung beim Schliessen derselben entgegen Federkraft verschiebbaren Betätigungsschieber gebildet sein. Auch kann dieser Betätigungsteil durch einen mit der Abdeckung verbundenen, von derselben abstehenden separaten Betätigungslappen gebildet sein. Bei einem Gerät, bei dem die Abdeckung einen von derselben abstehenden Verriegelungshaken aufweist, der bei in ihrer Schliessposition befindlicher Abdeckung von dem in seiner Verriegelungsposition befindlichen Verriegelungsteil festhaltbar ist, hat sich als vorteilhaft erwiesen, wenn der mit der Abdeckung verstellbare Betätigungsteil durch den Verriegelungshaken gebildet ist. Hierdurch wird der Verriegelungshaken vorteilhafterweise zweifach ausgenützt.

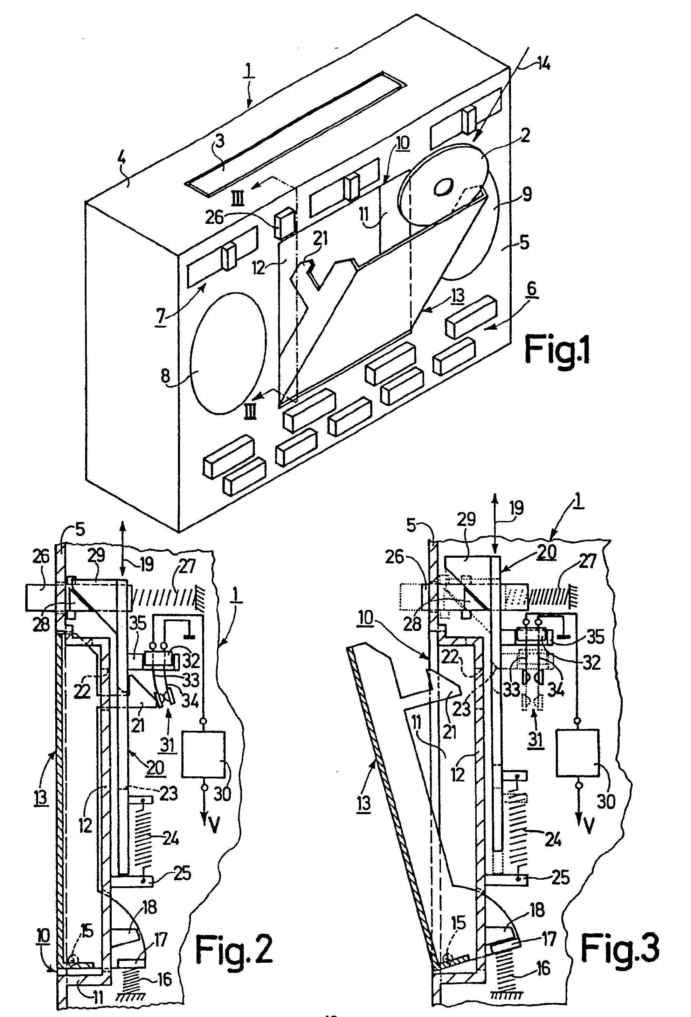

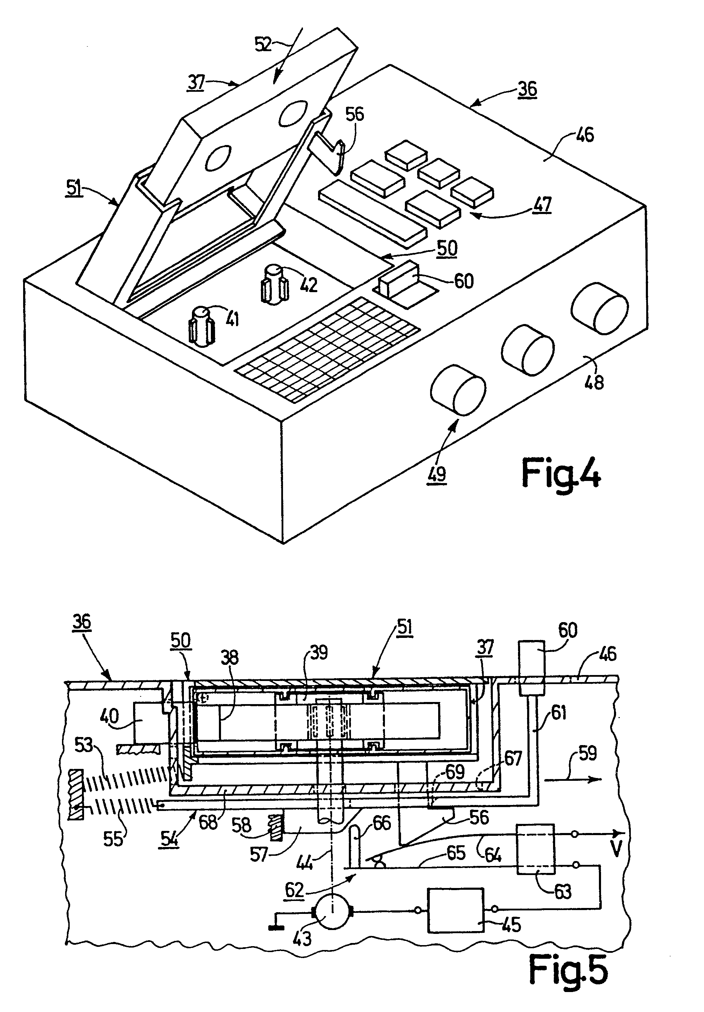

Die Erfindung wird im folgenden anhand von zwei Ausführungsbeispielen näher beschrieben, auf die sie aber nicht beschränkt sein soll. Die Fig. 1 zeigt schematisch in verkleinertem Massstab in Schrägansicht ein Wiedergabegerät für einen plattenförmigen Aufzeichnungsträger mit einer zwischen einer Offenposition und einer Schliessposition verschwenkbaren Abdeckung zum Verschliessen eines Aufnahmeraumes für den Aufzeichnungsträger, wobei die Abdeckung ihre Offenposition einnimmt. Die Fig. 2 zeigt in einem gegenüber der Fig. 1 grösseren Massstab in einem Schnitt längs der Linie III-III in Fig. 1 einen die Abdeckung enthaltenden Teil des Gerätes gemäss Fig. 1, wobei sich die Abdeckung in ihrer Schliessposition befindet. Die Fig. 3 zeigt analog wie die Fig. 2 in einem Schnitt längs der Linie III-III in Fig. 1 den die Abdeckung enthaltenden Teil des Gerätes gemäss Fig. 1, wobei sich die Abdeckung in ihrer Offenposition befindet und ein Verriegelungsschieber für die Abdeckung mittels einer Drucktaste in seiner die Abdeckung freigebenden Freigabeposition verstellt gehalten ist. Die Fig. 4 zeigt schematisch in verkleinertem Massstab in Schrägansicht ein Aufzeichnungs- und Wiedergabegerät für einen in einer Kassette untergebrachten bandförmigen Aufzeichnungsträger mit einer zwischen einer Offenposition und einer Schliessposition verschwenkbaren Abdeckung zum Verschliessen eines Aufnahmeraumes für die Kassette, wobei sich die Abdeckung in ihrer Offenposition befindet. Die Fig. 5 zeigt schematisch in einem etwa der zweifachen natürlichen Grösse entsprechenden Massstab in einem durch die Kassettenmitte hindurchgehenden Schnitt einen die Abdeckung für den Aufnahmeraum enthaltenden Teil des Gerätes gemäss Fig. 4, wobei sich die Abdeckung in ihrer Schliessposition befindet.

Die Figuren 1 bis 3 zeigen ein Gerät 1 zum Wiedergeben von Tonsignalen, die auf einem plattenförmigen, rotierend antreibbaren, mit einem Laserstrahl abtastbaren Aufzeichnungsträger 2, der im folgenden kurz Platte genannt wird, aufgezeichnet sind. Ein solches Gerät wird allgemein als Compact-Disc-Spieler bezeichnet. Beim vorliegenden Gerät handelt es sich um ein tragbares Gerät, wofür dasselbe einen versenkbaren Tragegriff 3 an seiner Deckenwand 4 aufweist. An seiner Frontwand 5 weist das Gerät einen Satz 6 von neun Drucktasten, die zum Einschalten der Betriebsarten des Gerätes dienen, und einen Satz 7 von drei Schiebereglern, die zum händischen Einstellen von Parametern der wiederzugebenden Tonsignale dienen, und zwei Lautsprecher 8 und 9 zum Wiedergeben der Tonsignale auf.

Das Gerät 1 weist ferner einen von seiner Frontwand 5 ins Geräteinnere sich erstreckenden Aufnahmeraum 10 zum Aufnehmen der Platte 2 auf, der von vier Seitenwänden 11 und einer Bodenwand 12 begrenzt ist. In den Aufnahmeraum 10 ragen vom Geräteinneren her eine Antriebseinrichtung mit einer Antriebsspindel zum rotierenden Antreiben der Platte 2 und eine gegenüber der Platte verstellbare, einen Laser enthaltende Abtasteinrichtung zum Abtasten der Platte. Diese beiden Einrichtungen sind in Fig. 1 nicht sichtbar, weil dieselben durch eine Abdeckung 13 verdeckt sind. Die Abdeckung 13 ist zum Verschliessen des Aufnahmeraumes 10 vorgesehen und in die Abdeckung ist eine Platte 2 in Richtung des Pfeiles 14 einführbar, wie dies in Fig. 1 dargestellt ist. Nach dem Einführen einer Platte 2 in die Abdeckung 13 wird die Platte in der Abdeckung so positioniert, dass sie darauffolgend unbehindert und störungsfrei mit der Antriebseinrichtung und der Abtasteinrichtung in Wirkverbindung treten kann. Dies erfolgt dann, wenn die Abdeckung geschlossen wird. Die Abdeckung 13 besteht im wesentlichen aus einer Hauptwand und zwei Seitenwänden und ist um eine senkrecht zu den beiden Seitenwänden verlaufende Schwenkachse 15 verschwenkbar gelagert. Die Abdeckung 13 ist von Hand aus von einer in den Figuren 1 und 3 dargestellten Offenposition, in der sie geöffnet ist und eine Platte 2 in sie einführbar ist, entgegen der Kraft von zwei Druckfedern 16, die je an einem von zwei von den Seitenwänden der Abdeckung 13 abstehenden Fortsätzen 17 angreifen, in eine in Fig. 2 dargestellte Schliessposition verstellbar, in der sie den Aufnahmeraum 10 verschliesst. In den Figuren 2 und 3 sind von den beiden Druckfedern 16 bzw. den beiden Fortsätzen 17 je nur eine bzw. einer sichtbar.

Die Offenposition der Abdeckung 13 ist dadurch festgelegt, dass sich die beiden Fortsätze 17 derselben unter der Kraftwirkung der beiden Druckfederns 16 an zwei von der Bodenwand 12 des Aufnahmeraumes 10 in das Geräteinnere abstehenden Positionieranschlägen 18 abstützen, von denen in den Figuren 2 und 3 nur einer sichtbar ist. Die Schliessposition der Abdeckung 13 ist dadurch festgelegt, dass die Abdeckung von einem in Richtung des Doppelpfeiles 19 auf nicht näher dargestellte Weise verschiebbar geführten Verriegelungsschieber 20 entgegen der Kraftwirkung der beiden Druckfedern 16 in ihrer Schliessposition festgehalten wird. Hierfür weist die Abdeckung 13 einen mit einer Seitenwand derselben fluchtend, von dieser abstehenden Verriegelungshaken 21 auf, der bei geschlossener Abdeckung 13 durch eine Öffnung 22 in der Bodenwand 12 des Aufnahmeraumes 10 hindurch in das Geräteinnere ragt und der dort durch eine Öffnung 23 im Verriegelungsschieber 20 hindurchgeführt ist, wobei der Verriegelungsschieber 20 das hakenförmige Ende des Verriegelungshakens 21 hintergreift.

Am Verriegelungsschieber 20 greift eine Zugfeder 24 mit einem Ende an, deren anderes Ende an einem von der Bodenwand 12 des Aufnahmeraumes 10 abstehenden Positionierlappen 25 angreift und die danach trachtet, den Verriegelungsschieber 20 mit seinem einen Ende an den Positionierlappen 25 angelegt zu halten. Wenn sich der Verriegelungsschieber 20 an dem Positionierlappen 25 abstützt, dann befindet sich der Verriegelungsschieber 20 in seiner in Fig. 2 dargestellten Verriegelungsposition, in der er die Abdeckung 13 entgegen der Kraft der beiden Druckfedern 16 in ihrer Schliessposition festhält. Der Verriegelungsschieber 20 ist von Hand aus entgegen der Kraft der Zugfeder 24 in eine in Fig. 3 dargestellte Freigabeposition verstellbar, in der er die Abdeckung 13 zum Verstellen aus ihrer Schliessposition freigibt, so dass dann die Abdeckung 13 mit der Kraft der beiden Druckfedern 16 aus ihrer Schliessposition verstellbar ist. Das Verstellen des Verriegelungsschiebers 20 in seine Freigabeposition erfolgt wie erwähnt von Hand aus, und zwar mittels einer Drucktaste 26, die durch die Frontwand 5 des Gerätes hindurchgeführt ist. Die Drucktaste 26 ist entgegen der Kraft einer Druckfeder 27 von einer in Fig. 2 dargestellten Ausschaltlage in eine in Fig. 3 dargestellte Einschaltlage verschiebbar und weist einen Verstellfortsatz 28 auf, der mit einem Mitnehmerfortstaz 29 des Verstellschiebers 20 zusammenwirkt. Beim Betätigen der Drucktaste 26 wird über deren Verstellfortsatz 28 und den Mitnehmerfortsatz 29 der Verriegelungsschieber 20 entgegen der Kraft der Zugfeder 24 verschoben.

Zum Einschalten und Ausschalten der gesamten elektrischen Einrichtungen 30 des Gerätes 1, die in den Figuren 2 und 3 nur symbolisch mit einem Kästchen dargestellt und die an eine Versorgungsspannung V angeschlossen sind, ist eine elektrische Schalteinrichtung 31 vorgesehen, die beim Verstellen des Verriegelungsschieber 20 zum Freigeben der Abdeckung 13 die elektrischen Einrichtungen 30 ausschaltet, bevor die Abdeckung 13 aus ihrer Schliessposition verstellt wird, und die bei aus ihrer Schliessposition verstellter Abdeckung 13 die elektrischen Einrichtungen 30 ausgeschaltet hält. Diese Schalteinrichtung 31 ist besonders einfach und billig aufgebaut. Sie weist nur einen einzigen Schalter 32 auf, dessen Schaltkontakte 33 und 34 bei in ihrer Schliessposition befindlicher Abdeckung 13 von dieser über einen mit derselben verstellbaren Betätigungsteil, der in vorliegendem Fall durch den Verriegelungshaken 21 gebildet ist, in einen aus Fig. 2 ersichtlichen ersten Schaltzustand, nämlich den geschlossenen Schaltzustand, geschaltet sind, in dem über den Schalter 32 die elektrischen Einrichtungen 30 eingeschaltet sind, und dessen Schaltkontakte 33 und 34 bei in ihrer Offenposition befindlicher Abdeckung 13 einen aus Fig. 3 ersichtlichen, mit punktierten Linien dargestellten zweiten Schaltzustand, nämlich den offenen Schaltzustand, einnehmen, in der über den Schalter 32 die elektrischen Einrichtungen 30 ausgeschaltet sind. Wie aus Fig. 3 ersichtlich ist, sind die Schaltkontakte 33 und 34 des Schalters 32 bei vorliegendem Gerät zusätzlich auch noch beim Verstellen des Verriegelungsschiebers 20 von seiner Verriegelungsposition in seine Freigabeposition zum Freigeben der Abdeckung 13 von dem Verriegelungsschieber 20 in ihren offenen zweiten Schaltzustand bringbar, wie dies in Fig. 3 mit vollen Linien dargestellt ist. Hierfür ist der Schalter 32 an dem Verriegelungsschieber 20 angebracht, wobei der Schalter 32 von einem vom Verriegelungsschieber seitlich abstehenden Haltearm 35 festgehalten wird. Bei in seiner Verriegelungsposition befindlichem Verriegelungsschieber 20 und in ihrer Schliessposition befindlicher Abdeckung 13, wie dies in Fig. 2 dargestellt ist, sind die Schaltkontakte 33 und 34 des Schalters 32 von der Abdeckung 13 über den Verriegelungshaken 21 in ihren geschlossenen ersten Schaltzustand geschaltet. Beim Verstellen des Verriegelungsschiebers 20 von seiner Verriegelungsposition in seine Freigabeposition werden die Schaltkontakte 33 und 34 gegenüber dem Verriegelungshaken 21 freigestellt und gelangen dabei in ihren offenen zweiten Schaltzustand, wie dies in Fig. 3 mit vollen Linien dargestellt ist.

Bei geöffneter Abdeckung 13 kann eine Platte 2 in die Abdeckung eingeführt werden. Um die Platte 2 in den Aufnahmeraum 10 für dieselbe zu bringen, wird die Abdeckung 13 samt der darin positionierten Platte von Hand aus entgegen der Kraft der beiden Druckfedern 16 von ihrer Offenposition in ihre Schliessposition verschwenkt. Dabei stösst der Verriegelungshaken 21 mit seinem abgeschrägten freien Ende gegen das ebenfalls teilweise abgeschrägt ausgebildete Ende der Öffnung 23 im Verriegelungsschieber 20. Beim weiteren händischen Verschwenken der Abdeckung 13 wird über das abgeschrägte Ende des Verriegelungshakens 21 der Verriegelungsschieber 20 entgegen der Kraft der Zugfeder 24 aus seiner Verriegelungsposition verschoben, wobei auch der Schalter 32 mitverstellt wird. Erst wenn die Abdeckung 13 ihre Schliessposition erreicht hat, kann der Verriegelungsschieber 20 durch die Zugfeder 24 wieder in seine Verriegelungsposition gezogen werden, wobei der Schalter 32 auch wieder mitverstellt wird und dabei seine Schaltkontakte 33 und 34 über den Verriegelungshaken 21, der hierbei auf den Schaltkontakt 33 unmittelbar einwirkt, in den in Fig. 2 dargestellten geschlossenen ersten Schaltzustand geschaltet werden. Bei diesem geschlossenen Schaltzustand wird der Spannungsversorgungskreis für die elektrischen Einrichtungen 30 geschlossen und auf diese Weise werden die elektrischen Einrichtungen 30 des Gerätes und somit auch die Antriebseinrichtung und die Abtasteinrichtung für den Aufzeichnungsträger eingeschaltet. Dieses Einschalten erfolgt erst dann, wenn die Abdeckung 13 bereits in ihrer Schliessposition sich befindet, wenn also die Platte 2 bereits mit der Antriebseinrichtung für dieselbe in Wirkverbindung gebracht ist, so dass Beschädigungen der Antriebseinrichtung und der Platte, wie sie durch zu frühes Einschalten der Antriebseinrichtung entstehen können, mit Sicherheit vermieden sind. Nunmehr kann eine gewünschte Betriebsart durch Betätigen einer der Tasten des Tastensatzes 6 gewählt und darauffolgend durchgeführt werden. Beispielsweise können alle auf der Platte gespeicherten Tonsignale wiedergegeben werden.

Um nach erfolgter Wiedergabe der Tonsignale die Platte 2 wieder aus dem Gerät entnehmen zu können, wird vom Benützer des Gerätes die Drucktaste 26 betätigt. Durch diese Betätigung wird der Verriegelungsschieber entgegen der Kraft der Zugfeder 24 aus seiner Verriegelungsposition verstellt. Nach einem ersten kurzen Hubbereich der Verstellbewegung des Verriegelungsschiebers 20 und folglich des auf diesem angebrachten Schalters 32 werden die Schaltkontakte 33 und 34 gegenüber dem Verriegelungshaken 21 freigestellt, weil der Schaltkontakt 33 von dem Verriegelungshaken 21 freikommt. Dabei gelangen die Schaltkontakte 33 und 34 in ihren offenen zweiten Schaltzustand, in dem über den Schalter 32 der Spannungsversorgungskreis für die elektrischen Einrichtungen 30 unterbrochen ist und auf diese Weise die elektrischen Einrichtungen und somit die Antriebseinrichtung und die Abtasteinrichtung für die Platte 2 ausgeschaltet sind. Dieses Ausschalten erfolgt also bereits nach einem ersten kurzen Hubbereich des Verriegelungsschiebers 20, wobei die Abdeckung 13 von dem Verriegelungsschieber 20 noch in ihrer Schliessposition festgehalten ist. Nach diesem Ausschalten der elektrischen Einrichtungen 30 wird die Antriebseinrichtung für die Platte sofort abgebremst, was auf elektronische oder mechanische Weise erfolgen kann ; dies ist aber in vorliegendem Zusammenhang unwesentlich. Somit wird die Antriebseinrichtung für die Platte bei noch geschlossener Abdeckung 13 bereits abgebremst. Beim weiteren Verschieben des Verriegelungsschiebers 20 bleibt die Abdeckung 13 weiterhin in ihrer Schliessposition arretiert. Erst wenn der Verriegelungsschieber 20 seine Freigabeposition erreicht hat, gibt er die Abdeckung 13 frei und die beiden Druckfedern 16 drücken die Abdeckung aus ihrer Schliessposition in ihre Offenposition, wobei sie die Platte 2 mitnimmt und dabei von der Antriebseinrichtung für dieselbe löst. Da die Antriebseinrichtung bereits zuvor abgebremst wurde, besteht überhaupt keine Gefahr, dass beim Öffnen der Abdeckung die Platte aus dem Gerät herausgeschleudert wird oder dass es zu einer Beschädigung der Antriebseinrichtung, der Abtasteinrichtung oder der Platte kommt. Wenn die Abdeckung 13 geöffnet ist, lässt der Benützer des Gerätes die Drucktaste 26 los. Daraufhin kehrt die Drucktaste 26 durch die Kraft der Druckfeder 27 in ihre Ausschaltlage zurück, wobei die Zugfeder 24 den Verriegelungsschieber 20 in seine Verriegelungsposition zurückzieht, in der er sich an dem Positionierlappen 25 abstützt. Bei dieser Verstellung des Verriegelungsschiebers 20 samt dem Schalter 32 bleiben die Schaltkontakte 33 und 34 in ihrem offenen zweiten Schaltzustand, in dem über den Schalter 32 die elektrischen Einrichtungen 30 ausgeschaltet sind, weil der Verriegelungshaken 21 aus dem Verstellweg des Schaltkontaktes 33 heraus verstellt ist, wie dies in Fig. 3 mit punktierten Linien dargestellt ist. Somit bleiben bei geöffneter Abdeckung 13 die elektrischen Einrichtungen 30 des Gerätes und somit die Antriebseinrichtung und die Abtasteinrichtung für die Platte ausgeschaltet. Daher gibt der Laser der Abtasteinrichtung bei geöffneter Abdeckung keine Laserstrahlen ab. Durch das Abschalten der Antriebseinrichtung für die Platte bei geöffneter Abdeckung ist erreicht, dass beim neuerlichen Einsetzen einer Platte in das Gerät keine Beschädigungen der Platte und der Antriebseinrichtung für die Platte auftreten können.

Wie aus vorstehender Beschreibung hervorgeht, wird bei vorliegendem Gerät das zeitgerechte Einschalten und Ausschalten der elektrischen Einrichtungen des Gerätes mit nur einem einzigen Schalter erreicht, der einen besonders einfachen Aufbau aufweist. Das Vorsehen von nur einem Schalter ist im Hinblick auf geringen Raumbedraf, wenig Montagearbeit und wenig Justiermassnahmen vorteilhaft. Ein solcher Schalter ist billig und in einer Reihe von handelsüblichen Formen erhältlich, so dass leicht eine den jeweiligen Konstruktionserfordernissen angepasste Auswahl getroffen werden kann.

Das vorstehend beschriebene Gerät kann beispielsweise in einer etwas abgewandelten Form auch so ausgebildet sein, dass die mit der Frontwand des Gerätes fluchtende Hauptwand der Abdeckung einen die Drucktaste zum Freigeben der Abdeckung umschliessenden Abschnitt aufweist, durch den die Drucktaste hindurchgeführt ist. Beim Betätigen der Drucktaste wird dann bei diesem Gerät die Abdeckung über diesen Abschnitt der Hauptwand von Hand aus so lange in ihrer Schliessposition gehalten, bis der Benützer die Drucktaste freigibt. Da dieses händische Freigeben gegenüber dem Freigeben durch den Verriegelungsschieber immer etwas verzögert erfolgt, wird dadurch die Zeitspanne, die zum Abbremsen der Antriebseinrichtung für die Platte zur Verfügung steht, weiter verlängert.

In den Figuren 4 und 5 ist ein Gerät 36 zum Aufzeichnen und Wiedergeben von Tonsignalen auf einem in einer Kassette 37 untergebrachten bandförmigen Aufzeichnungsträger 38, im folgenden kurz Magnetband genannt, dargestellt. Die Kassette 37 enthält zwei nebeneinander liegende, drehbar gelagerte, rotierend antreibbare Wickelkerne 39, von denen in Fig. 5 nur einer sichtbar ist und zwischen denen das Magnetband 38 verläuft. In seinem Verlauf ist das Magnetband 38 entlang einer langen Schmalseite der Kassette 37 geführt, die Öffnungen zum Hindurchtritt von zwei Magnetköpfen 40, von denen in Fig. 5 nur einer sichtbar ist, aufweist. Die Magnetköpfe dienen zum Löschen bzw. zum Aufzeichnen und Wiedergeben von Tonsignalen. Der Antrieb des Magnetbandes erfolgt bei diesem Gerät bei allen Betriebsarten durch Antreiben der Wickelkerne 39, wofür das Gerät 36 zwei rotierend antreibbare Wickeldorne 41 und 42 aufweist. Zum Antreiben der Wickeldorne 41 und 42 ist ein Motor 43 vorgesehen, der über eine mit strichpunktierten Linien symbolisch dargestellte Antriebseinrichtung 44 wahlweise einen der beiden Wickeldorne 41 und 42 in zueinander entgegengesetzten Drehrichtungen antreibt. Die elektrische Speisung des Motors 43 erfolgt von einer Motorspeiseschaltung 45 her, die an eine Versorgungsspannung V anschaltbar ist und mit der beispielsweise das Antriebsmoment, die Drehzahl und die Drehrichtung des Motors 43 beeinflussbar sind. Zum Einschalten der Betriebsarten des Gerätes weist dasselbe an seiner Deckenwand 46 einen Satz 47 von sechs Drucktasten auf. Ferner weist das Gerät an seiner Frontwand 48 einen Satz 49 von drei Drehreglern zum händischen Einstellen von Parametern der wiederzugebenden Tonsignale auf.

Das Gerät 36 weist im Bereich seiner Deckenwand 46 einen von derselben sich in das Geräteinnere erstreckenden Aufnahmeraum 50 zum Aufnehmen einer Kassette 37 auf. In diesen Aufnahmeraum ragen vom Geräteinneren heraus die beiden Wickeldorne 41 und 42. Zum Überführen einer Kassette 37 in den Aufnahmeraum 50 weist das Gerät 36 eine zusätzlich als Kassettenhalteeinrichtung ausgebildete Abdeckung 51 auf, mit der der Aufnahmeraum 50 abdeckbar bzw. verschliessbar ist. Die Abdeckung 51 ist zwischen einer in Fig. 4 dargestellten Offenposition, in der sie geöffnet ist und eine Kassette 37 in Richtung des Pfeiles 52 in sie einführbar ist, und eine in Fig. 5 dargestellte Schliessposition verstellbar, in der sie den Aufnahmeraum 50 verschliesst und in der eine in die Abdeckung 51 eingeführte Kassette 37 eine Betriebslage im Gerät einnimmt. Die Verstellung der Abdeckung 51 von ihrer Offenposition in ihre Schliessposition erfolgt von Hand aus entgegen der Kraft einer an der Abdeckung angreifenden Druckfeder 53.

Die Offenposition der Abdeckung 51 ist auf analoge Weise festgelegt, wie bei dem Gerät 1 gemäss den Figuren 1 bis 3, jedoch sind die hierfür vorgesehenen Anschläge in den Figuren 4 und 5 nicht dargestellt. Die Schliessposition der Abdeckung 51 ist ebenso wie beim Gerät gemäss den Figuren 1 bis 3 mit einen Verriegelungsschieber 54 festgelegt, der aus einer in Fig. 5 dargestellten Verriegelungsposition entgegen der Kraft einer an ihm angreifenden Zugfeder 55 in eine nicht dargestellte Freigabeposition verstellbar ist und der in seiner Verriegelungsposition einen von der Abdeckung 51 abstehenden Verriegelungshaken 56 hintergreift. Die Verriegelungsposition des Verriegelungsschiebers 54 ist dadurch festgelegt, dass sich ein von demselben abstehender Betätigungslappen 57 unter der Wirkung der Zugfeder 55 an einer gerätefesten Positionierleiste 58 abstützt. Die Verstellung des Verriegelungsschiebers 54 aus seiner Verriegelungsposition in seine Freigabeposition in Richtung des Pfeiles 59 erfolgt von Hand aus, wofür das Gerät mit einer händisch verschiebbaren Schiebetaste 60 versehen ist, die über einen Steg 61 unmittelbar mit dem Verriegelungsschieber 54 verbunden ist.

Zum Ein- und Ausschalten der Motorspeiseschaltung 45 weist das Gerät 36 eine elektrische Schalteinrichtung 62 auf, die beim Verstellen des Verriegelungsschiebers 54 zum Freigeben der Abdeckung 51 die Motorspeiseschaltung 45 ausschaltet, bevor die Abdeckung 51 aus ihrer Schliessposition verstellt wird, und die bei aus ihrer Schliessposition verstellter Abdeckung 51 die Motorspeiseschaltung 45 ausgeschaltet hält. Auch die Schalteinrichtung 62 weist nur einen einzigen Schalter 63 auf, dessen Schaltkontakte 64 und 65 bei in ihrer Schliessposition befindlicher Abdeckung 51 von dieser über ihren Verriegelungshaken 56 in einen geschlossenen ersten Schaltzustand, wie in Fig. 5 dargestellt ist, geschaltet sind. In diesem geschlossenen Schaltzustand ist über den Schalter 63 die Motorspeiseschaltung 45 an die Versorgungsspannung V angeschaltet und diese daher eingeschaltet. Bei in ihrer Offenposition befindlicher Abdeckung 51 nehmen die Schaltkontakte 64 und 65 einen offenen Schaltzustand, der in Fig. 5 nicht dargestellt ist, ein, in dem über den geöffneten Schalter 63 die Motorspeiseschaltung 45 von der Versorgungsspannung V abgeschaltet und daher ausgeschaltet ist. Die Schaltkontakte 64 und 65 des Schalters 63 sind beim Verstellen des Verriegelungsschiebers 54 von seiner Verriegelungsposition in seine Freigabeposition von dem Verriegelungsschieber 54 in ihren offenen zweiten Schaltzustand bringbar, in der über den Schalter 63 die Motorspeiseschaltung 45 ausgeschaltet ist. Hierfür ist bei vorliegendem Gerät der Betätigungslappen 57 des Verriegelungsschiebers 54 vorgesehen, in dessen Verstellweg ein mit dem Schaltkontakt 65 verbundener Schaltnippel 66 ragt, über den der Schaltkontakt 65 vom Verriegelungsschieber 54 bei dessen Verschieben in Richtung des Pfeiles 59 so verstellt wird, dass die beiden Schaltkontakte 64 und 65 in ihren offenen zweiten Schaltzustand geschaltet werden. Bei diesem offenen Schaltzustand der Schaltkontakte 64 und 65 sind beide federnd ausgebildeten Schaltkontakte aus ihrer gestreckten Lage, in der die beiden Schaltkontakte ebenfalls einen offenen Schaltzustand einnehmen, herausgebogen.

Bei geöffneter Abdeckung 51 nehmen die beiden federnden Schaltkontakte 64 und 65 ihre gestreckte Lage und daher ihren offenen Schaltzustand ein, weil keiner der beiden Schaltkontakte 64 und 65 betätigt ist. Dadurch ist die Motorspeiseschaltung 45 ausgeschaltet und daher sind der Motor 43, die Antriebseinrichtung 44 und die Wickeldorne 41 und 42 stillgesetzt. Beim händischen Verschwenken der Abdeckung 51 aus ihrer Offenposition in ihre Schliessposition tritt der Verriegelungshaken 56 durch einen Schlitz 69 in der Bodenwand 68 des Aufnahmeraumes 50 hindurch und tritt in einen teilweise abgeschrägt begrenzten Schlitz 69 im Verriegelungsschieber 54 ein, wobei über das abgeschrägte freie Ende des Verriegelungshakens 56 der Verriegelungsschieber 54 entgegen der Kraft der Zugfeder 55 in Richtung des Pfeiles 59 verschoben wird. Dabei stösst der Betätigungslappen 57 gegen den Schaltnippel 66 und verstellt diesen, so dass der den Schaltnippel 66 tragende federnde Schaltkontakt 65 von dem noch in seiner gestreckten Lage befindlichen anderen Schaltkontakt 64 weggebogen wird. Die beiden Schaltkontakte 64 und 65 bleiben dabei weiter im offenen Schaltzustand. Beim weiteren Verstellen der Abdeckung 51 stösst der Verriegelungshaken 56 gegen den Schaltkontakt 64 und biegt diesen bis in die in Fig. 5 dargestellte Lage, wobei aber aufgrund des bereits zuvor verstellten und dabei verbogenen Schaltkontaktes 65 die beiden Schaltkontakte 64 und 65 in ihrem offenen Schaltzustand verbleiben, in dem beide Schaltkontakte verbogen sind. Wenn die Abdeckung 51 ihre Schliessposition erreicht hat, wird der Verriegelungsschieber 54 von der Zugfeder 55 in seine in Fig. 5 dargestellte Verriegelungsposition gezogen. Erst kurz bevor der Verriegelungsschieber 54 seine Verriegelungsposition erreicht, wobei dann der Verriegekungsschieber die Abdeckung 51 bereits in ihrer Schliessposition festhält, gibt der Betätigungslappen 57 derselben den Schaltnippel 66 frei, so dass dann der den Schaltnippel 66 tragende Schaltkontakt 65 in seine gestreckte Lage zurückkehrt. Der Schaltkontakt 65 bleibt vom Verriegelungshaken 56 in seiner verbogenen Lage gehalten. Die beiden Schaltkontakte 64 und 65 nehmen dann ihren in Fig. 5 dargestellten geschlossenen Schaltzustand ein, in der die Motorspeiseschaltung 45 eingeschaltet ist. Nun kann durch Tastenbetätigung einer der Tasten des Tastensatzes 47 eine Betriebsart im Gerät gewählt werden. Entsprechend dieser Wahl wird die Motorspeiseschaltung 45 endgültig in Funktion gesetzt, wobei dann der Motor 43 entsprechend der gewählten Betriebsart angetrieben wird und seine Antriebskraft entsprechend der gewählten Betriebsart über die Antriebseinrichtung 44 auf einen der beiden Wickeldorne 41 bzw. 42 zum Antreiben eines der beiden Wickelkerne 39 und des Magnetbandes 38 übertragen wird. Da die Motorspeiseschaltung 45 über den Schalter 63 erst bei geschlossener und verriegelter Abdeckung 51 eingeschaltet wird, kann auch der Antrieb der Wickeldorne 41 und 42 erst erfolgen, nachdem die Abdeckung in ihrer Schliessposition verriegelt ist und damit eine eingesetzte Kassette in ihrer Betriebslage festgehalten ist. Somit ist gewährleistet, dass das Kuppeln der Wickeldorne 41 und 42 mit den Wickelkernen 39 bei stillstehenden Wickeldornen erfolgt, so dass Beschädigungen der Wickeldorne und der Wickelkerne, wie sie beim Kuppeln derselben bei angetriebenen Wickeldornen auftreten können, mit Sicherheit vermieden sind.

Um eine eingesetzte Kassette 37 wieder aus dem Gerät 36 entnehmen zu können, wird die Schiebetaste 60 von Hand aus in Richtung des Pfeiles 59 verschoben. Dadurch wird über den Steg 61 auch der Verriegelungsschieber 54 in dieser Richtung verschoben, wobei bereits nach einem kurzen Hubbereich des Verriegelungsschiebers 54 der Betätigungslappen 57 desselben gegen den Schaltnippel 66 stösst und diesen verstellt, wodurch der den Schaltnippel tragende Schaltkontakt 65 aus seiner gestreckten Lage verbogen wird und daher die beiden Schaltkontakte 64 und 65 in ihren offenen Schaltzustand geschaltet werden, in dem beide Schaltkontakte verbogen sind. Somit wird bereits nach diesem kurzen Hubbereich des Verriegelungsschiebers 54 die Motorspeiseschaltung 45 von der Versorgungsspannung V abgeschaltet und damit ausser Funktion gesetzt. Folglich wird auch der Motor 43, sollte er nicht bereits zuvor durch Betätigen einer der Tasten des Tastensatzes 47 ausgeschaltet worden sein, bereits nach diesem kurzen Hubbereich des Verriegelungsschiebers 54 ausgeschaltet. Beim weiteren Verschieben des Verriegelungsschiebers 54 bleibt der Schaltkontakt 65 in seiner abgebogenen Lage und daher der Schalter 63 geöffnet und der Motor 43 ausgeschaltet, wobei der Motor 43 bzw. die Antriebseinrichtung 44 für die Wickeldorne 41 und 42 rasch abgebremst wird. Wenn der Verriegelungsschieber 54 seine Freigabeposition erreicht, ist bereits eine ausreichend starke Abbremsung erfolgt, so dass die Wickeldorne 41 und 42 und die Wickelkerne 39 stillstehen, wenn die Abdeckung 51 aus ihrer Schliessposition und damit die darin enthaltene Kassette 37 aus ihrer Betriebslage mit der Kraft der Druckfeder 53 verstellt werden. Somit erfolgt das Entkuppeln der Wickelkerne 39 von den Wickeldornen 41 und 42 bei stillstehenden Wickeldornen, womit auch in diesem Fall Beschädigungen vorgebeugt ist. Beim Verstellen der Abdeckung 51 aus ihrer Schliessposition in ihre Offenposition kommt der Verriegelungshaken 56 ausser Berührung vom Schaltkontakt 64, wonach dieser in seine gestreckte Lage zurückkehrt. Wenn die Abdeckung ihre Offenposition erreicht hat, kann der Benützer die Schiebetaste 60 loslassen, wobei dann der Verriegelungsschieber 54 mit der Kraft der Zugfeder 55 in seine Verriegelungsposition zurückverschoben wird. Gegen Ende dieser Verschiebebewegung gibt der Betätigungslappen 57 den Schaltnippel 66 frei, so dass dann auch der Schaltkontakt 65 in seine gestreckte Lage zurückkehren kann, wobei aber die beiden Schaltkontakte 64 und 65 in ihrem offenen Schaltzustand verbleiben, weil der Schaltkontakt 64 bereits zuvor in seine gestreckte Lage zurückgekehrt ist. Somit verbleiben bei geöffneter Abdeckung 51 die beiden Schaltkontakte 64 und 65 in ihrem offenen Schaltzustand und daher die Motorspeiseschaltung 45 ausgeschaltet, so dass für ein Stillgesetzthalten der Wickeldorne 41 und 42 gesorgt ist.

Auch bei diesem Gerät wird das zeitgerechte Einschalten und Ausschalten eines Teiles der elektrischen Einrichtungen desselben, nämlich der Motorspeiseschaltung, mit nur einem einzigen Schalter erreicht. Somit werden auch bei diesem Gerät die gleichen Vorteile wie beim Gerät gemäss den Figuren 1 bis 3 erhalten.

Die Erfindung ist selbstverständlich nicht auf die beiden vorstehend beschriebenen Ausführungsbeispiele beschränkt, sondern es sind noch eine Reihe von weiteren Ausführungen im Rahmen der Erfindung möglich. So kann der Aufzeichnungsträger unmittelbar in den Aufnahmeraum des Gerätes einführbar sein, wobei dann die Abdeckung keine zusätzliche Haltefunktion zum Halten des Aufzeichnungsträgers beim Überführen der Abdeckung von deren Offenposition in deren Schliessposition wie bei den beiden vorstehend beschriebenen Ausführungsbeispielen erfüllt, sondern nur zum Abdecken bzw. Verschliessen des Aufnahmeraumes dient. An der Abdeckung kann auch eine Blattfeder oder eine Torsionsfeder angreifen ; diese Federn können auch so angeordnet und ausgebildet werden, dass sie nur während eines Teiles der Verstellbewegung der Abdeckung von der Schliessposition in die Offenposition dieselbe kräftemässig beaufschlagen, wobei dann der restliche Teil der Verstellung der Abdeckung in ihre Offenposition von Hand aus erfolgen muss. Anstelle einer schwenkbaren Abdeckung kann auch eine gegenüber der Bodenwand des Aufnahmeraumes heb- bzw. senkbare Abdeckung vorgesehen sein. Der Verriegelungsteil kann anstelle als Schieber auch als verschwenkbarer Hebel ausgebildet sein. Beim Gerät gemäss dem ersten Ausführungsbeispiel schaltet der Schalter die gesamte elektrische Einrichtung des Gerätes ein und aus ; selbstverständlich könnte der Schalter auch nur zum Ein- und Ausschalten der Antriebseinrichtung und der Abtasteinrichtung dieses Gerätes verwendet werden. Beim Gerät gemäss dem zweiten Ausführungsbeispiel könnte der Schalter nicht nur die Motorspeiseschaltung, sondern auch weitere elektrische Einrichtungen, beispielsweise elektrische Endstufenverstärker oder die gesamte Tonsignal-Verarbeitungsschaltung, ein- und ausschalten. Beim Gerät gemäss dem ersten Ausführungsbeispiel schaltet der Schalter die von ihm ein- und ausschaltbaren elektrischen Einrichtungen unmittelbar ein ; es kann aber mit diesem Schalter noch ein weiterer Schalter in Serie geschaltet sein, der beispielsweise die ordnungsgemässe Anwesenheit einer Platte im Aufnahmeraum detektiert und der nur bei Anwesenheit einer Platte das Einschalten der elektrischen Einrichtungen freigibt. Bei beiden Ausführungsbeispielen werden die Schalter beim Schliessen der Abdeckung geschlossen ; es können aber auch Schalter vorgesehen werden, die beim Schliessen der Abdeckung geöffnet werden und deren Schaltzustände beispielsweise mit einem Mikroprozessor abgefragt werden, der dann in Abhängigkeit von den Schaltzuständen die elektrischen Einrichtungen ein- und ausschaltet. Bei beiden Geräten gemäss vorstehend beschriebenen Ausführungsbeispielen ist der Schalter vom Verriegelungshaken der Abdeckung her betätigbar. Selbstverständlich kann die Abdeckung als Betätigungsteil auch einen separaten Betätigungsfortsatz aufweisen ; auch kann die Betätigung des Schalters von der Abdeckung her über einen im Gerät verstellbar angeordneten Zwischenteil, wie einen Zwischenhebel oder einen Zwischenschieber, erfolgen. Eine Taste zum Verstellen eines Verriegelungsteiles zum Freigeben der Abdeckung kann auch auf der Abdeckung angebracht werden.

**Patentansprüche**

1. Aufzeichnungs- und/oder Wiedegabegerät (1, 36) mit
 – einem zum Aufnehmen eines Aufzeichnungsträgers vorgesehenen Aufnahmeraum (10, 50),
 – einer zum Verschliessen des Aufnahmeraumes (10, 50) vorgesehenen verstellbaren Abdeckung (13, 51), die von Hand aus der Offenposition entgegen der Kraft von mindestens einer ersten Feder (16, 53) in die Schliessposition verstellbar ist,
 – einem zum Festhalten der Abdeckung (13, 51) in ihrer Schliessposition vorgesehenen Verriegelungsteil (20, 54), das von Hand entgegen der Kraft von mindestens einer zweiten Feder (24, 55) aus der Verriegelungsposition in die Freigabeposition verstellbar ist, und
 – einem zum Ein- und Ausschalten von elektrischen Einrichtungen des Gerätes vorgesehenen elektrischen Schalter, der beim Verstellen des Verriegelungsteiles (20, 54) in die Freigabeposition diese elektrischen Einrichtungen ausschaltet, bevor die Abdeckung (13, 51) aus ihrer Schliessposition verstellt wird, und bei aus ihrer Schliessposition verstellter Abdeckung (13, 51) diese ekektrischen Einrichtungen ausgeschaltet hält, und dessen Schaltkontakte (33, 34 und 64, 65) sich entweder in einem ersten Schaltzustand, in dem über den Schalter (31, 62) die elektrischen Einrichtungen einschaltbar sind, oder in einem zweiten Schaltzustand, in dem über den Schalter die elektrischen Einrichtungen ausgeschaltet sind, befinden, und die beim Verstellen des Verriegelungsteiles aus seiner Verriegelungsposition in seine Freigabeposition vom Verriegelungsteil (20, 54) in ihren zweiten Schaltzustand bringbar sind,
 dadurch gekennzeichnet, dass die Schaltkontakte (33, 34 und 64, 65) des Schalters (31, 62) von der Abdeckung (13, 51) über ein mit derselben verstellbares Betätigunsteil (21, 56) in den ersten Schaltzustand geschaltet sind, wenn die Abdeckung (13, 51) sich in ihrer Schliessposition befindet.

2. Gerät nach Anspruch 1, dadurch gekennzeichnet, dass der Schalter (32) an dem Verriegelungsteil (20) angebracht ist und seine Schaltontakte (33, 34) bei in seiner Verriegelungsposition befindlichem Verriegelungsteil (20) und in ihrer Schliessposition befindlicher Abdeckung (13) von dieser über den mit derselben verstellbaren Betätigungsteil (21) in ihren ersten Schaltzustand geschaltet sind und beim Verstellen des Verriegelungsteiles (20) von seiner Verriegelungsposition in seine Freigabeposition gegenüber dem mit der Abdeckung (13) verstellbaren Betätigunsteil (21) freigestellt werden und dabei in ihren zweiten Schaltzustand gelangen.

3. Gerät nach Anspruch 1 order 2, dadurch gekennzeichnet, dass die Abdeckung (13, 51) einen von derselben abstehenden Verriegelungshaken aufweist, der bei in ihrer Schliessposition befindlicher Abdeckung von dem in seiner Verriegelungsposition befindlichen Verriegelungsteil (20, 54) festhalbar ist, wobei das mit der Abdeckung (13, 51) verstellbare Betätigunsteil (21, 56) durch den Verriegelungshaken gebildet ist.

## Claims

1. A recording and/or reproducing apparatus (1, 36) comprising
– a holder compartment (10, 50) adapted to receive a record carrier,
– a movable cover (13, 51) for closing the holder compartment (10, 50), which cover is movable by hand against the force of at least a first spring (16, 53) from the open position to a closed position,
– a latching member (20, 54) for retaining the cover (13, 51) in its closed position, which member is movable by hand against the force of at least a second spring (24, 55) from the latching position to the release position, and
– an electrical switch for switching on and off electrical devices of the apparatus, which switch switches off said electrical devices while the latching member (20, 54) is moved to the release position before the cover (13, 51) has been moved out of its closed position and keeps said electrical devices switched off while the cover (13, 51) is not in its closed position, and whose switching contacts (33, 34 and 64, 65) are either in a first switching state, in which the electrical devices can be switched on via the switch (31, 62), or in a second switching state, in which the electrical devices have been switched off via the switch, and which can be set to their second switching state by the latching member (20, 54) when the latching member is moved from its latching position to its release position, characterized in that when the cover (13, 51) is in its closed position the switching contacts (33, 34 and 64, 65) of the switch (31, 62) have been set to the first switching state by the cover (13, 51) via an actuating member (21, 56) which is movable with said cover.

2. An apparatus as claimed in Claim 1, characterized in that the switch (32) is arranged on the latching member (20) and, when the latching member (20) is in its latching position and the cover (13) is in its closed position, the switching contacts (33, 34) of said switch have been set to their first switching state by said cover via the actuating member (21) which is movable together with said cover and, when the latching member (20) is moved from its latching position to its release position, said switching contacts are disengaged from the actuating member (21) which is movable by means of the cover and then assume their second switching state.

3. An apparatus as claimed in Claim 1 or 2, characterized in that the cover (13, 51) comprises a latching hook which projects from said cover and which, when the cover is in its closed position, can be retained by the latching member (20, 54) which is in its latching position, the actuating member (21, 56) which is movable by means of the cover (13, 51) being constituted by the latching hook.

## Revendications

1. Appareil d'enregistrement et/ou de reproduction (1, 36) comportant :
– un réceptacle (10, 50) prévu pour recevoir un support d'enregistrement ;
– un couvercle (13, 51) déplaçable, prévu pour fermer le réceptacle (10, 50), qui peut être déplacé à la main à partir de la position d'ouverture à l'encontre de la sollicitation d'au moins un premier ressort (16, 53) vers la position de fermeture ;
– un organe de verrouillage (20, 54), prévu pour retenir le couvercle (13, 51) dans sa position de fermeture, qui peut être déplacé à la main, à l'encontre de la sollicitation d'au moins un second ressort (24, 55), à partir de sa position de verrouillage vers sa position de libération, et
– un interrupteur électrique prévu pour la mise en circuit et hors circuit de dispositifs électriques de l'appareil qui, lors du déplacement de l'organe de verrouillage (20, 54) vers la position de libération, met ces dispositifs électriques hors circuit avant que le couvercle (13, 51) soit écarté de sa position de fermeture, et maintient ces dispositifs électriques hors circuit lorsque le couvercle (13, 51) est écarté de sa position de fermeture, ses contacts de commutation (33, 34 et 64, 65) se trouvant soit dans un premier état de commutation dans lequel les dispositifs électriques peuvent être mis en circuit par l'intermédiaire de l'interrupteur (31, 62), soit dans un second état de commutation dans lequel les dispositifs électriques sont mis hors circuit par l'intermédiaire de l'interrupteur, et ses contacts de commutation, lors du déplacement de l'organe de verrouillage à partir de sa position de verrouillage vers sa position de libération, pouvant être amenés par l'organe de verrouillage (20, 54) dans leur second état de commutation, caractérisé en ce que les contacts de commutation (33, 34 et 64, 65) de l'interrupteur (31, 62) sont commutés par le couvercle (13, 51) dans le premier état de commutation par l'intermédiaire d'un organe d'actionnement (21, 56) déplaçable avec ce couvercle, lorsque le couvercle (13, 51) se trouve dans sa position de fermeture.

2. Appareil suivant la revendication 1, caractérisé en ce que l'interrupteur (32) est monté sur l'organe de verrouillage (20) et ses contacts de commutation (33, 34), lorsque l'organe de verrouillage (20) se trouve dans sa position de verrouillage et que le couvercle (13) se trouve dans sa position de fermeture, sont commutés dans leur premier état de commutation par ce dernier, par l'intermédiaire de l'organe d'actionnement (21) déplaçable avec celui-ci, et sont libérés, lors du déplacement de l'organe de verrouillage (20), depuis sa position de libération par rapport à l'organe d'actionnement (21) déplaçable avec le couvercle (13) et parviennent ainsi dans leur second état de commutation.

3. Appareil suivant la revendication 1 ou 2, caractérisé en ce que le couvercle (13, 51) comporte un crochet de verrouillage en saillie qui, lorsque le couvercle se trouve dans sa position de fermeture, peut être immobilisé par l'organe de verrouillage (20, 54) se trouvant dans sa position de fermeture, l'organe d'actionnement (21, 56) déplaçable avec le couvercle (13, 51) étant formé par le crochet de verrouillage.

Fig.1

Fig.2

Fig.3

Fig.4

Fig.5